# EUROPEAN PATENT APPLICATION

(11) **EP 2 198 966 A1**
(43) Date of publication of application: **23.06.2010**
(21) Application number: 08172375.1
(22) Date of filing: 19.12.2008
(51) Int. Cl.: B01L 3/00, G02B 21/34

(54) **Micro-fluidic device and a method of providing a sample**

(71) Applicant: Nederlandse Organisatie voor toegepast -natuurwetenschappelijk onderzoek TNO, 2628 VK Delft (NL)
(72) Inventor: Van Loon, Cornelis Joannes, 5221 LX 's-Hertogenbosch (NL)
(74) Representative: Hatzmann, Martin

(57) **Abstract**

A micro-fluidic device including a base element, a cover element having an opened condition and a closed condition relative to the base element, a fluid chamber bounded by the base element and the cover element when the cover element is in the closed condition, at least one guide assembly with a guide track element having a guide track and with a guide follower, the at least one guide assembly being configured to stably keep the cover element in the closed condition and to maintain a well-defined and fixed distance between the base element and the cover element so that the fluid chamber has a well-defined and fixed height.

## Description

The invention relates to a micro-fluidic device that includes a base element and a cover element that bound a fluid chamber.

Micro-fluidic devices are devices in which in general low volume fluids are handled. The volumes of these devices are in the range of several microliters or less.

Such devices can be used to separate components, to have certain components or reactants to react and/or to interact, and/or to analyse samples and may, for example, include cell counting chambers or a lab on a chip.

A problem of the known devices is the introduction of fluid into the fluid chamber.

It is known that the cover part is bonded or glued to the base part. This gluing or bonding can for instance be performed chemically or physically. A disadvantages of such bonding or gluing is that the bonding or gluing agent can leave traces of its components in the fluid chamber. Such traces may disrupt the fluid in the chamber and or the process that has to be performed with the fluid in the chamber. Another disadvantage is that strain forces may occur after hardening of the bonding layer that may alter the shape of the micro-fluidic device. The distance between the cover element and the base element, that is the height of the fluid chamber, is in most cases of vital importance, for example for the formation of a single layer of cells within the chamber so that counting of the cells is possible.

An example of a micro-fluidic device with a cover element that is glued on a base element before the fluid to be examined is introduced into the fluid chamber is described in the European Patent EP 0 809 815. Because of the small dimensions of the channels and chambers of these devices, the fluid transport is predominantly performed by capillary forces acting on a fluid to be transported within the device. These capillary forces tend to increase or decrease dimensions of the channels and the chambers in which the fluid is to be transported and/or contained. In, for example, cell counting chambers, a fluid like blood, semen, urine and/or another bodily fluid is introduced into a fluid chamber of specific dimensions by the capillary forces and after filling, the number of cells in the chamber or a part thereof can be counted. In conventional cell counters, such as e.g. hemacytometer or spermacytometer, the counting chamber is formed by two transparent or translucent plates, being arranged at a very well defined intermediate distance, such that the volume of the counting chamber in question is precisely defined. The distance between the plates should be small enough in order to have light or other radiation passing through the chamber and furthermore to avoid the possibility of local stacking of the cells and/or the particles contained in the fluid to be analysed. This stacking of cells or particles is undesired since it can introduce miscounts and/or errors in the total cell or particle count. The actual counting of the solid particles such as cells can e.g. be performed visually, by photometry, a coulter counter, flow cytometry or computer-automated analysis using, for instance, pattern recognition software.

A drawback of the application of capillary transport of cells and/or particles containing fluids is a capillary transport induced separation of the cells and/or the particles in certain areas of the liquid. This effect is known as the Segre-Silberberg effect and is for instance described in detail in J. Androl. 2005; 26; 107-122.

An object of the invention is to provide an alternative micro-fluidic device in which these drawbacks are at least partly alleviated. Examples of the micro-fluidic device may be a counting chamber or a lab on a chip.

A further object is to provide a micro-fluidic that can be manipulated in a simple and effective way by a laboratory assistant or laboratory analyst, that is relative low in production cost while at the same time is provided with a fluid chamber with precisely defined height.

According to a first aspect of the invention a micro-fluidic device is provided including:
- a base element
- a cover element having an opened condition and a closed condition relative to the base element;
- at least one fluid chamber bounded by the base element and the cover element when the cover element is in the closed condition;
- at least one guide assembly including:
   o a guide track element having a guide track, the guide track element being connected with one of the base element and the cover element; and
   o a guide follower on the other one of the base element and the cover element,
   the at least one guide assembly being configured to stably keep the cover element in the closed condition and to maintain a well-defined and fixed distance between the base element and the cover element so that the at
   least one fluid chamber has a well-defined and fixed height.

By these features a reversible sealing closure may be obtained. Since no bonding or gluing is necessary, a laboratory assistant may perform the closing and opening of the micro-fluid device without any further complex methods. By inserting the fluid onto the base element and by closing the cover element, the sample fluid is forced into the whole fluid chamber by means of displacement instead of by means of capillary forces. Thus, the Segre-Silberberg effect can be avoided, leading to more accurate counting of the cells and/or particles concerned.

Since the closing is very robust, in one exemplary embodiment the fluids may be placed on the base element by a pumping action, instead of entering through the action of capillary forces. This pumping can be for instance performed with a positive displacement pump and/or another actuator, like for instance a pipette or dropglass.

A further advantage of the micro-fluidic device according to the invention is that the sample or reactants can be inserted in the device before the device is closed whereas with the devices in the art, the closing has to be performed beforehand in order to avoid interference between the bonding agents and the sample or the reactants.

Further advantages of the invention are that the laboratory assistant or the laboratory analyst can simply fill, close and apply the micro-fluidic device without the need of applying any glue solvents and or glue.

The micro-fluidic devices may be used in the medical analytical and or therapeutic research and/or in biomedical sensorial analysis.

In an embodiment, the micro-fluidic device may include at least one guide assembly of a first type that provides a hinge connection between the base element and the cover element, and at least one guide assembly of a second type that provides a guide track from which the associated guide follower may be taken out. Thus a hingeable cover element is provided that may be closed and re-opened again.

The invention also provides a method of providing a sample that may be analysed, comprising:
- providing a micro-fluidic device according to the invention;
- placing a sample amount to be analysed on the base element; and
- closing the cover element of the micro-fluidic device.

For a better understanding, an embodiment of the inspection device and the method will be further elucidated by the following Figs., wherein:
Fig. 1 is a schematic cross section of an embodiment of the invention in a first position;
Fig. 2 is a schematic cross section of the embodiment of Fig. 1 in a second position;
Fig. 3 is a schematic cross section of the embodiment of Fig. 1 in a third position;
Fig. 4 is schematic cross section of the embodiment of Fig. 1 in a fourth position.

Fig. 5 is a schematic perspective view on the embodiment of Fig. 1.

In the Figs. and the description the same or corresponding parts will have identical or similar reference signs. The embodiments shown should not be understood as limiting the invention in any way or form.

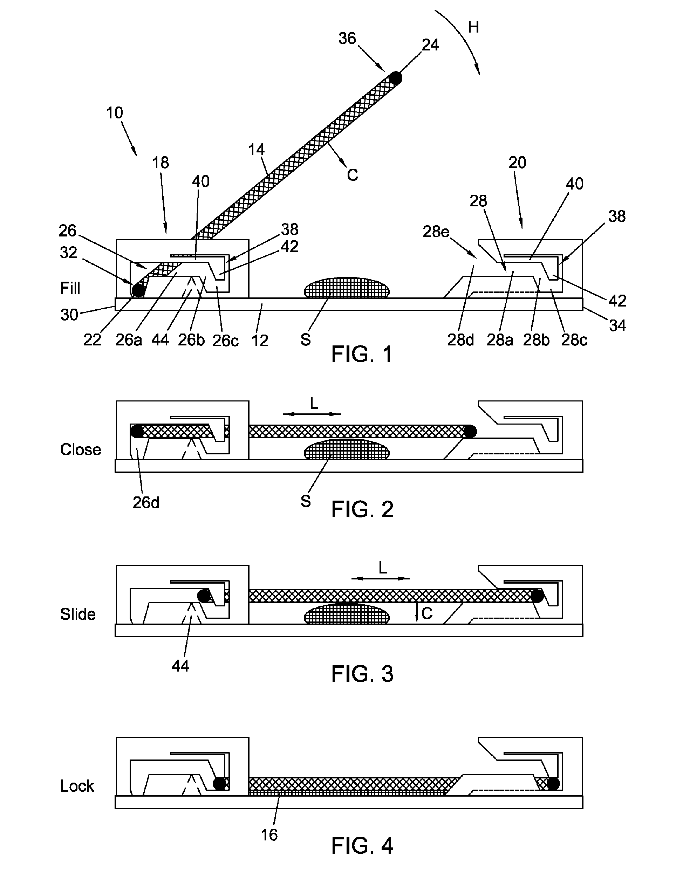

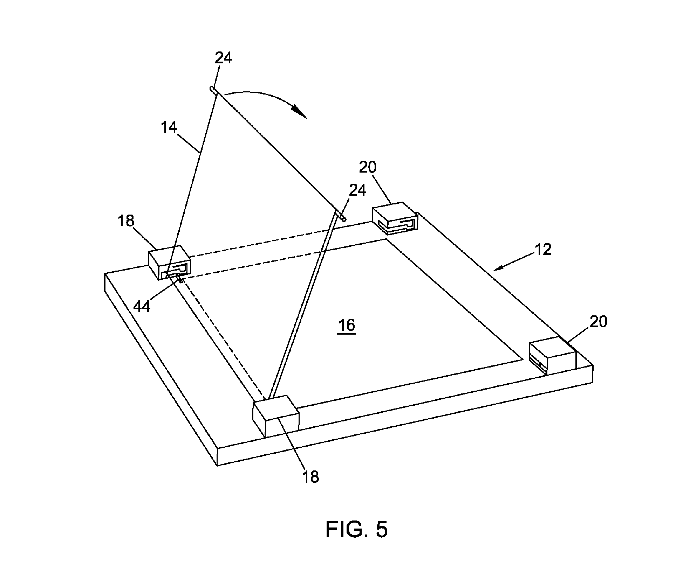

The Figs. show an exemplary embodiment of a micro-fluidic device. The micro-fluidic device 10 shown includes a base element 12 and cover element 14 having an opened condition (Fig. 1 and 5) and a closed condition (Fig. 4) relative to the base element 12. At least one fluid chamber 16 is bounded by the base element 12 and the cover element 14 when the cover element 14 is in the closed condition (see Fig. 4). The base element 12 and the cover element 14 may both have a substantially flat, plate like configuration. The side of the base element 12 that is directed to the cover element 14 may have at least one very shallow fluid chamber 16. In an embodiment more than one fluid chamber may be present. Also fluid channels leading to the at least one fluid chamber 16 may be present to introduce additional fluids after the cover element 14 has been brought in the closed position. In the case of multiple fluid chambers 16, channels may be provided that interconnect the chambers. Also the cover element 14 may be provided with shallow fluid chambers and shallow fluid channels. In another embodiment it is also feasible that the base element 12 and the cover element 14 are both flat and that the sample fluid is contained between the base element 12 and the cover element 14 only by capillary forces.

The micro-fluidic device 10 may include at least one guide assembly 18, 20, 22, 24. Each guide assembly 18-24 includes a guide track element 18, 20 having a guide track 26, 28. The guide track element 18, 20 may be connected with one of the base 12 element and the cover element 14. In the embodiment shown, the guide track elements 18, 20 are connected with the base element 12. Each guide assembly also includes a guide follower 22, 24, on the other one of the base element 12 and the cover element 14. In the embodiment shown, the guide followers 22, 24 are connected to the cover element 12. The guide assemblies 18, 20, 22, 24 are configured to stably keep the cover element 14 in the closed condition and to maintain a well-defined and fixed distance between the base element 12 and the cover element 14 so that the at least one fluid chamber 16 has a well-defined and fixed height.

In an embodiment at least one guide assembly 18, 22 of a first type may be present that provides a hinge connection between the base element 12 and the cover element 14. That embodiment may also include at least one guide assembly 20, 24 of a second type that provides a guide track 28 from which the associated guide follower 24 may be taken out. In the exemplary embodiment shown, two guide track elements 18 of the first type are adjacent a first edge 30 of the base element 12 and two associated guide followers 22 connected to the cover element 14 adjacent a first edge 32 of the cover element 14. Two guide track elements 20 of the second type are adjacent a second edge 34 of the base element 12 that is opposite the first edge 30 and two associated guide followers 24 are connected to the cover element 14 adjacent a second edge 36 of the cover element 14 that is opposite the first edge 32.

Each guide assembly may, as shown in the embodiment, include a biasing member 38 configured to engage the associated guide follower 22, 24 in the closed position of the cover element 14 and to bias the guide follower 22, 24 against one side of the guide track 26, 28 so as to exactly position the cover element 14 relative to the base element 12.

As shown in the embodiment, each guide track element 18, 20 may be a unitary part. In such a unitary guide track element 18, 20 the biasing member 38 may include, as shown, an elastic flexible leg 40 with a notch 42 at a free end thereof.

In an embodiment, of which an example is shown in the Figs., the at least one guide track element 18, 20 may have a guide track 26, 28 that includes a first part 26a, 28a that extends parallel to the base element 12. The guide track 26, 28 may also include a second part 26b, 28b that connects to an end of the first part 26a, 28a and that extends substantially perpendicular to the base element 12. Further, a third part 26c, 28c may be provided that connects to an end of the second part 26b, 28b and extends substantially parallel to the base element 12. The biasing member 38, more particular the notch 42 thereof, extends in the third part 26c, 28c of the guide track 26, 28.

In an embodiment, the guide track 26 of the guide assembly 18 of the first type may include a fourth part 26d that connects with one end to an end of the first part 26a that is opposite to the end to which the second part 26b is connected. The fourth part 26d may have another end that is closed and that forms a hinge pocket in which an associated guide follower 22 is positioned when the cover element 14 is to be hinged relative to the base element 12.

In an embodiment, the guide track 28 of the guide assembly 20 of the second type, may include a fifth part 28d that connects with one end to an end of the first part 28a that is opposite to the end to which the second part 28b is connected. Another end of the fifth part 28d forms and opening 28e via which the associated guide follower 24 may be introduced into the guide track 28 and be taken out from the guide track 28. The fifth part 28d may have a tapering configuration with a narrow end adjacent the one end connected to the first part 28a and a wide end adjacent the opening 28e.

In an embodiment, the micro-fluidic device may include at least one cover element support 44 that is positioned adjacent the first edge 30 of the base element 12. In the example of such an embodiment that is shown in the figures two cover element supports 44 are provided, namely adjacent the two first guide track elements 18. The at least one cover element support 44 may be configured to support the cover element 14 adjacent the first edge 32 thereof so that the cover element 14 extends substantially parallel to the base element 12 when the cover element 14 is in an intermediate position in which the distance between the cover element 14 and the base element 12 is larger than in the closed position.

The at least one cover element support 44 may be positioned more remote from the first edge 30 of the base element 12 than the fourth part 26d of the guide track 26. This results in that, when the cover element 14 is hinged from the open position into the intermediate position, the track followers 22 associated with the guide track elements 18 of the first type are lifted upwardly to a level relative to the base element 12 in which the first part 26a of the guide track 26 extends. After that, the cover element 14 may be shifted through the guide track parts 26a, 26b and 26c. An advantage of the cover element supports 44 is that a sample amount S that has been deposited on the base element 12 is not yet spread out over the base element 12 by the cover element 14 when being hinged downwardly and when being slid through the first parts 26a, 28a of the respective guide tracks 26, 28. Only when the guide followers 22, 24 slide through the second parts 26b, 28b of the guide tracks 26, 28 the distance between the cover element 14 and the base element 12 will diminish in a controlled manner, thereby spreading out the sample amount S over the base element 12.

In an alternative embodiment, instead of cover element supports 44, the inclination of the fourth parts 26d of the guide tracks 26 may be small so that the shifting will also cause lifting of the first edge 32 of the cover element 12.

The entire micro-fluidic device 10 may be manufactured from plastic, for example, by injection moulding. Such a method of manufacturing is quick and may minimize the costs of the micro-fluidic device. Alternatively, the base element 12 and the cover element 14 may be formed from glass or from a plastic plate. The at least one fluid chamber 16 and the fluid channels in the base element 12 and, possibly the cover element 14 may be formed by an embossing process or by etching or by depositing an additional layer that bounds the at least one fluid chamber 16 and the fluid channels that may be present. The guide track elements 18, 20 may be formed from plastic or from any other suitable material such as a metal. The may also form a unitary part with the base element 12. The guide followers 22, 24 may also form a unitary part of the cover element 14. In an alternative embodiment the guide followers 22, 24 may be manufactured separately and subsequently be connected to the cover element 14.

As shown in Figs. 1-4, a method of providing a sample that may be analysed, may include:
- providing a micro-fluidic device 10 as described;
- placing a sample amount S to be analysed on the base element 12; and
- closing the cover element 14 of the micro-fluidic device.
In an embodiment the closing may include:
- hinging the cover element 14 relative to the base element 12 into a intermediate position (Fig. 2) in which the cover element 14 is substantially parallel to the base element 12; and
- shifting the cover element 14 so that each guide follower 22, 24 shifts through the associated guide track 26, 28 until the cover element 14 is in the stable, closed position (Fig. 4).

Fig. 3 shows the cover element 14 after it has been shifted through the first parts 26a, 28a of the guide tracks 26, 28. From Figs. 2-4 it is clear that during the shifting of the cover element 14, the cover element 14 first moves parallel to the base element 12 as indicated by arrow L. Subsequently, the cover element 14 moves towards the base element 12. During that movement the sample amount S is spread out over the fluid chamber 16. It is clear that no capillary forces are needed to spread out the sample amount 6. Thus, the distribution of particles or cells in the sample amount will not be disturbed by the Segre-Silberberg effect. Next, the cover element 14 is shifted again parallel to the base element 12 towards the stable, closed position. In the closed position of the cover element 14, as shown in Fig. 4, the guide followers 22, 24 are pressed by the notches 24 of the biasing members 38 against a guide wall bounding the guide track 26, 28. Thus the position of the cover 14 is stable and fixed relative to the base element 12.

In the embodiment as described numerous adaptations and modifications are possible. For instance most of the above described applications concern counter chambers. Besides counter chambers the invention can similarly be applied in a laboratory on a chip (LOAC) application. The base element 12 will then include a chip. Alternatively, as stated before, the micro-fluidic device may include a plurality of fluid chambers and/or fluid channels. These and other adaptations and modifications are possible without departing from the spirit and scope of the invention as defined in the claims.

## Claims

1. A micro-fluidic device (10) including:
• a base element (12);
• a cover element (14) having an opened condition and a closed condition relative to the base element (12);
• at least one fluid chamber (16) bounded by the base element (12) and the cover element (14) when the cover element is in the closed condition;
• at least one guide assembly (18, 22; 20, 24) including:
o a guide track element (18, 20) having a guide track (26, 28), the guide track element being connected with one of the base element (12) and the cover element (14); and
o a guide follower (22, 24) on the other one of the base element (12) and the cover element (14),
the at least one guide assembly being configured to stably keep the cover element in the closed condition and to maintain a well-defined and fixed distance between the base element (12) and the cover element (14) so that the at least one fluid chamber (16) has a well-defined and fixed height.

2. The micro-fluidic device according to claim 1, including:
• at least one guide assembly (18) of a first type that provides a hinge connection between the base element (12) and the cover element (14);
• at least one guide assembly (20) of a second type that provides a guide track (28) from which the associated guide follower (24) may be taken out.

3. The micro-fluidic device according to claim 2, including:
• two guide track elements (18) of the first type adjacent a first edge (30) of the base element (12) and two associated guide followers (22) connected to the cover element (14) adjacent a first edge (32) of the cover element (14); and
• two guide track elements (20) of the second type adjacent a second edge (34) of the base element (12) that is opposite the first edge (30) and two associated guide followers (24) connected to the cover element (14) adjacent a second edge (36) of the cover element (14) that is opposite the first edge (32) of the cover element.

4. The micro-fluidic device according to any one of the preceding claims, the at least one guide assembly including:
• a biasing member (38) configured to engage the associated guide follower (22, 24) in the closed position of the cover element (14) and to bias the guide follower (22, 24) against one side of the guide track (26, 28) so as to exactly position the cover element relative to the base element.

5. The micro-fluidic device according to claim any of the preceding claims, wherein each guide track element (18, 20) is a unitary part.

6. The micro-fluidic device according to claim 4, wherein each guide track element (18, 20) is a unitary part and the biasing member (38) includes a flexible leg (40) with a notch (42) at a free end thereof.

7. The micro-fluidic device according to any one of the preceding claims, wherein the at least one guide track element (18, 20) includes a guide track including:
• a first part (26a, 28a) that extends parallel to the base element (12);
• a second part (26b, 28b) that connects to an end of the first part and that extends substantially perpendicular to the base element (12); and
• a third part (26c, 28c) that connects to an end of the second part and extends substantially parallel to the base element (12).

8. The micro-fluidic device according to claim 7 including:
• a biasing member (38) configured to engage the associated guide follower (22, 24) in the closed position of the cover element (14) and to bias the guide follower (22, 24) against one side of the guide track (26, 28) so as to exactly position the cover element (14) relative to the base element (12), the biasing member (38) extending in the third part (26c, 28c) of the guide track.

9. The micro-fluidic device according to claim 7 or 8, wherein for the guide assembly (18) of the first type, the guide track (26) includes:
• a fourth part (26d) that connects with one end to an end of the first part (26a) that is opposite to the end to which the second part (26b) is connected, the fourth part (26d) having another end that is closed and that forms a hinge pocket in which an associated guide follower (22) is positioned when the cover element (14) is to be hinged.

10. The micro-fluidic device according to claim 7 or 8, wherein for the guide assembly (22) of the second type the guide track (28) includes:
• a fifth part (28d) that connects with one end to an end of the first part (28a) that is opposite to the end to which the second part (28b) is connected, wherein another end of the fifth part (28d) forms and opening (28e) via which the associated guide follower (24) can be introduced into the guide track (28) and be taken out from the guide track (28).

11. The micro-fluidic device according to claim 10, wherein the fifth part (28d) has a tapering configuration with a narrow end adjacent the one end thereof and a wide end adjacent the opening (28e).

12. The micro-fluidic device according to claim 3, including:
• at least one cover element support (44) that is positioned adjacent the first edge (30) of the base element (12) and that is configured to support the cover element (14) adjacent the first edge (32) thereof so that it extends substantially parallel to the base element (12) when the cover element (14) is in an intermediate position in which the distance between the cover element (14) and the base element (12) is larger than in the closed position.

13. The micro-fluidic device of claim 9 having the features of claim 12, wherein the at least one cover element support (44) is positioned more remote from the first edge (30) of the base element (12) than the fourth part (26d) of the guide track (26), so that, when the cover element (14) is hinged from the open position into the intermediate position, the track followers (22) associated with the guide track elements (18) of the first type are lifted upwardly to a level relative to the base element (12) in which the first parts (26a) of the guide tracks (26) extend.

14. A method of providing a sample that may be analysed, comprising:
• providing a micro-fluidic device (10) according to any of the preceding claims;
• placing a sample amount (S) to be analysed on the base element (12); and
• closing the cover element (14) of the micro-fluidic device (10).

15. The method according to claim 14, wherein the closing includes:
• hinging the cover element (14) relative to the base element (12) into an intermediate position in which the cover element (14) is substantially parallel to the base element (12);
• shifting the cover element (14) so that each guide follower (22, 24) shifts through the associated guide track (26, 28) until the cover element (14) is in the stable, closed position.
